(19) **Europäisches Patentamt**
**European Patent Office**
**Office européen des brevets**

(11) **EP 1 904 260 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(21) Anmeldenummer: **06742311.1**

(22) Anmeldetag: **04.05.2006**

(51) Int Cl.:
**B23K 26/04** (2006.01)

(86) Internationale Anmeldenummer:
**PCT/DE2006/000775**

(87) Internationale Veröffentlichungsnummer:
**WO 2006/119734 (16.11.2006 Gazette 2006/46)**

(54) **VERFAHREN UND VORRICHTUNG ZUR BESTIMMUNG EINER LATERALEN RELATIVBEWEGUNG ZWISCHEN EINEM BEARBEITUNGSKOPF UND EINEM WERKSTÜCK**

METHOD AND DEVICE FOR DETERMINING THE LATERAL RELATIVE DISPLACEMENT BETWEEN A PROCESSING HEAD AND A WORKPIECE

PROCEDE ET DISPOSITIF POUR DETERMINER UN MOUVEMENT RELATIF LATERAL ENTRE UNE TETE D'USINAGE ET UNE PIECE

(84) Benannte Vertragsstaaten:
**AT BE BG CH CY CZ DK EE ES FI FR GB GR HU IE IS IT LI LT LU LV MC NL PL PT RO SE SI SK TR**

(30) Priorität: **12.05.2005 DE 102005022095**

(43) Veröffentlichungstag der Anmeldung:
**02.04.2008 Patentblatt 2008/14**

(73) Patentinhaber:
• **Fraunhofer-Gesellschaft zur Förderung der angewandten Forschung e.V.**
**80686 München (DE)**
• **Rheinisch-Westfälische Technische Hochschule Aachen (RWTH)**
**52062 Aachen (DE)**

(72) Erfinder: **REGAARD, Boris**
**48198 Ypsilanti, Michigan (US)**

(74) Vertreter: **Gagel, Roland**
**Patentanwaltskanzlei**
**Dr. Roland Gagel**
**Landsberger Strasse 480 a**
**D-81241 München (DE)**

(56) Entgegenhaltungen:
**EP-A- 0 899 584    US-A- 4 891 767**
**US-A- 5 961 858**

## Beschreibung

Die vorliegende Erfindung betrifft ein Verfahren zur Bestimmung einer lateralen Relativbewegung zwischen einem Bearbeitungskopf und einem Werkstück bei der Bearbeitung des Werkstücks, insbesondere mit einem Bearbeitungsstrahl. Die Erfindung betrifft auch eine Vorrichtung für die Bearbeitung eines Werkstücks mit einem Bearbeitungsstrahl, die den Bearbeitungskopf umfasst und zur Bestimmung der lateralen Relativbewegung zwischen dem Bearbeitungskopf und einem Werkstück ausgebildet ist.

Bei der Bearbeitung von Werkstücken mit einem Bearbeitungsstrahl, insbesondere einem Laserstrahl, wird in der Regel entweder das Werkstück unter dem Bearbeitungskopf bewegt, aus dem der Bearbeitungsstrahl austritt, oder der Bearbeitungskopf wird über das Werkstück geführt. Ein Beispiel ist die Lasermaterialbearbeitung, bei der der aus dem Bearbeitungskopf austretende Laserstrahl bspw. zum Schweißen, zum Schneiden, zum Löten oder zum Auftragen oder Generieren über die Oberfläche des Werkstücks geführt wird. Die Relativbewegung zwischen dem Bearbeitungsstrahl und dem Werkstück muss bei derartigen Bearbeitungsprozessen entsprechend der gewählten Bearbeitungsstrategie sehr genau und kontrolliert erfolgen. Vergleichbare Anforderungen gelten für andere Bearbeitungstechniken, bei denen beispielsweise ein mechanisches Werkzeug im Bearbeitungskopf eingesetzt ist.

## Stand der Technik

Bei industriell eingesetzten Anlagen zur Bearbeitung von Werkstücken kann die Relativbewegung bei Bedarf aus den Steuerungsdaten des Handhabungssystems gewonnen werden, das den Bearbeitungskopf oder das Werkstück bewegt. Hierbei muss allerdings eine hinreichende Stellgenauigkeit vorhanden sein, um ausreichend genaue Daten zu erhalten. Alternativ sind taktile Messeinrichtungen bekannt, die die Momentangeschwindigkeit über die Drehgeschwindigkeit einer Andrückrolle erfassen, die mechanisch fest mit dem Bearbeitungskopf verbunden ist und während der Bearbeitung am Werkstück anliegt.

Die US 4,891,767 offenbart ein maschinelles Visualisierungssystem zur Positionserfassung eines Inspektions- oder Bearbeitungskopfes in Relation zu einer Oberfläche, sowie ein entsprechendes Verfahren zum Betrieb des Systems. Die Oberfläche weist hierfür eine Vielzahl geometrisch identischer und vorbekannter Oberflächenmerkmale auf.

Aus der DE 10126725 A1 sind ein Verfahren und eine Vorrichtung zur Laserbearbeitung bekannt, bei denen neben dem Bearbeitungslaser auch ein Positionierungslaser zur Kontrolle des Bearbeitungsvorgangs eingesetzt wird. Das am Werkstück reflektierte Laserlicht des Positionierungslasers wird hierbei mit einem Sensor erfasst, um aus der Position und Intensität des Lichtflek-kes auf dem Sensor auf den Abstand des Bearbeitungskopfes zum Werkstück schließen zu können.

Die Aufgabe der vorliegenden Erfindung besteht darin, ein Verfahren zur Bestimmung der lateralen Relativbewegung zwischen einem Bearbeitungskopf und einem Werkstück bei der Bearbeitung des Werkstücks anzugeben, das eine berührungslose und genaue Erfassung der Relativbewegung ermöglicht. Weiterhin soll eine Vorrichtung für die Bearbeitung eines Werkstücks mit einem Bearbeitungsstrahl angegeben werden, die die Durchführung des Verfahrens ermöglicht.

## Darstellung der Erfindung

Die Aufgabe wird mit dem Verfahren und der Vorrichtung gemäß den Patentansprüchen 1 und 14 gelöst. Vorteilhafte Ausgestaltungen des Verfahrens und der Vorrichtung sind Gegenstand der Unteransprüche oder lassen sich der nachfolgenden Beschreibung sowie den Ausführungsbeispielen entnehmen.

Bei dem vorliegenden Verfahren zur Bestimmung einer lateralen Relativbewegung zwischen einem Bearbeitungskopf und einem Werkstück wird eine Oberfläche des Werkstücks im Bereich des Bearbeitungskopfes mit optischer Strahlung beleuchtet. Diese Beleuchtung kann kontinuierlich oder wiederholt jeweils nur bei der nachfolgend beschriebenen Erfassung eines Reflexionsmusters erfolgen. Von der Oberfläche des Werkstücks im Bereich des Bearbeitungskopfes reflektierte optische Strahlung wird wiederholt mit einem optischen Detektor ortsaufgelöst erfasst, der mechanisch fest bzw. starr mit dem Bearbeitungskopf verbunden ist. Mit dem optischen Detektor werden dabei optische Reflexionsmuster zu unterschiedlichen Zeiten erhalten. Die wiederholte Erfassung erfolgt in zeitlichen Abständen, bei denen zeitlich aufeinander folgende Reflexionsmuster von überlappenden Oberflächenbereichen des Werkstücks erhalten werden. Das jeweilige Reflexionsmuster erfasst hierbei somit einen räumlichen Bereich der Werkstückoberfläche einer bestimmten Dimension, die durch das optische Abbildungssystem vor dem optischen Detektor und den Abstand zur Werkstückoberfläche bestimmt ist. Bei einer Relativbewegung zwischen Bearbeitungskopf und Werkstück werden zu unterschiedlichen Zeiten die von unterschiedlichen Oberflächenbereichen des Werkstücks verursachten Reflexionsmuster erfasst. Der zeitliche Abstand, zu dem die Reflexionsmuster erfasst werden, muss dabei so gering gewählt werden, dass die jeweils zeitlich aufeinander folgend erfassten Reflexionsmuster von Oberflächenbereichen des Werkstückes stammen, die überlappen, so dass Teilabschnitte in den Reflexionsmustern übereinstimmen. Die laterale Relativbewegung kann dann durch den Vergleich jeweils zeitlich aufeinander folgender Reflexionsmuster bestimmt werden, indem der Versatz der jeweils identischen oder sehr ähnlichen Teilabschnitte in den jeweils zeitlich aufeinander folgenden Reflexionsmustern bestimmt und unter Berücksichtigung der Abbildungsgeometrie aus diesem Versatz die laterale Relativbewegung zwischen dem Bearbeitungskopf und dem Werkstück ermittelt wird. Diese Bestimmung kann während, vor oder nach der Bearbeitung kontinuierlich oder auch nur bei Bedarf erfolgen. Unter der lateralen Relativbewegung ist hierbei die Bewegung zwischen Werkstück und Bearbeitungskopf parallel zur Werkstückoberfläche oder senkrecht zur Strahlachse eines gegebenenfalls zur Bearbeitung eingesetzten Bearbeitungsstrahls zu verstehen. Diese Bewegung erfolgt in der Regel geradlinig in einer Richtung. Jedoch kann bei der Bestimmung bspw. auch eine Rotationsbewegung zwischen Werkstück und Bearbeitungskopf berücksichtigt werden.

Mit dem Verfahren lassen sich auch unterschiedliche Relativbewegungen unterschiedlicher Bereiche des Werkstücks bestimmen, bspw. bei einer Verschiebung zwischen zu fügenden Werkstücken, indem die Relativbewegungen in mehreren Ausschnitten des Bildes bzw. Reflexionsmusters ermittelt werden.

Bei dem vorliegenden Verfahren wird ausgenutzt, dass die Werkstücke bei der Materialbearbeitung in der Regel Oberflächenrauhigkeiten aufweisen, die bei Beleuchtung, insbesondere bei zur Oberfläche senkrechter oder nur gering geneigter Beleuchtung, ein unregelmäßiges Reflexionsmuster erzeugen. Die hierfür erforderliche Werkstückrauhigkeit ist bei den meisten Anwendungen automatisch gegeben. Jeder beleuchtete Oberflächenbereich des Werkstücks erzeugt dabei ein für diesen Bereich charakteristisches, unregelmäßiges Reflexionsmuster, das mit einem vorzugsweise senkrecht oder gering geneigt angeordneten ortsauflösenden Detektor, bspw. einer CMOS-Kamera, erfasst werden kann. Durch Vergleich von zwei aufeinander folgenden Aufnahmen bzw. Reflexionsmustern kann die Relativbewegung zwischen dem Bearbeitungskopf und dem Werkstück ermittelt werden, indem Bildausschnitte mit größter Ähnlichkeit in diesen Aufnahmen gefunden werden. Die Relativbewegung oder Relativverschiebung entspricht der Pixelverschiebung dieser Bereiche unter Berücksichtigung der optischen Abbildung für die Aufzeichnung der Reflexionsmuster. Für die Ermittlung der jeweils ähnlichsten Teilbereiche wird vorzugsweise die Technik der Kreuzkorrelation eingesetzt.

Das vorliegende Verfahren wird bevorzugt bei der Bearbeitung eines Werkstücks mit einem Bearbeitungsstrahl eingesetzt, der aus dem Bearbeitungskopf austritt. Hierbei wird das Werkstück vorzugsweise zumindest annähernd koaxial zum Bearbeitungsstrahl, bspw. einem Ionen-, Elektronen- oder Laserstrahl, im Bereich des Auftreffortes des Bearbeitungsstrahls auf dem Werkstück mit optischer Strahlung beleuchtet. Besonders vorteilhaft lässt sich das Verfahren durchführen, indem die Beleuchtung der Oberfläche des Werkstücks mit optischer Strahlung und die Erfassung der von der Oberfläche des Werkstücks reflektierten optischen Strahlung durch die Einrichtung zur Führung und/oder Formung des Bearbeitungsstrahls hindurch erfolgen.

Eine besonders vorteilhafte Anwendung des Verfahrens sowie der zugehörigen Vorrichtung stellt die Lasermaterialbearbeitung dar, wobei alle Arten von Laserstrahlquellen, bspw. $CO_2$-Laser, Nd:YAG-Laser oder Diodenlaser, als Strahlquellen für den Bearbeitungsstrahl eingesetzt werden können. Das Verfahren ist hierbei besonders für alle Bearbeitungsprozesse geeignet, bei denen das optische System zur Führung des Bearbeitungsstrahls eine Beleuchtung und Beobachtung der Bearbeitungszone parallel zum Bearbeitungsstrahl erlaubt. Ein Beispiel ist die Lasermaterialbearbeitung mit $CO_2$-Lasern, bei der die Bearbeitungszone bspw. durch eine Bohrung im Fokussierspiegel für die Laserstrahlung beleuchtet und beobachtet werden kann. Ein weiteres Beispiel ist die Lasermaterialbearbeitung mit Nd:YAG-Lasern, bei der die Beleuchtung und Beobachtung bspw. durch einen dichroitischen Spiegel in der Bearbeitungsoptik hindurch erfolgen kann.

Die optische Strahlung zur Beleuchtung des Werkstücks wird vorzugsweise so gewählt, dass die durch die Bearbeitung erzeugte Sekundärstrahlung sowie rückreflektierte Bearbeitungsstrahlung des Bearbeitungsprozesses gegenüber der reflektierten optischen Beleuchtungsstrahlung mit einem optischen Filter zumindest teilweise unterdrückt werden kann. Dieser optische Filter wird vor dem optischen Detektor angeordnet, so dass das Reflexionsmuster von dieser ebenfalls einfallenden Störstrahlung nicht oder nur in einem geringen Maße beeinflusst wird. Auch die Intensität der optischen Strahlung zur Beleuchtung des Werkstücks muss ausreichend groß gewählt werden, um die auf den Detektor treffende Störstrahlung zu überstrahlen. Vorzugsweise wird die Wellenlänge der optischen Strahlung für die Beleuchtung des Werkstücks in einem anderen Wellenlängenbereich als die Wellenlänge des Bearbeitungsstrahls gewählt. Als Lichtquelle für die Beleuchtung kann bspw. ein Diodenlaser eingesetzt werden. Durch Verwendung eines optischen Bandpassfilters gleicher Wellenlänge wie die optische Strahlung wird die außerhalb dieses Wellenlängenbereiches liegende Störstrahlung unterdrückt. Dadurch kann die Messung auch während des Bearbeitungsprozesses erfolgen, da die störende Sekundärstrahlung sowie störende rückreflektierte Bearbeitungsstrahlung des Bearbeitungsprozesses hinreichend ausgeblendet werden.

Die für die Durchführung des Verfahrens ausgebildete Vorrichtung zur Bearbeitung eines Werkstücks mit einem Bearbeitungsstrahl umfasst einen Bearbeitungskopf, der zumindest eine Einkoppelöffnung und eine Strahlformungsoptik für den Bearbeitungsstrahl sowie einen ortsauflösenden optischen Detektor aufweist. In einer vorteilhaften Ausgestaltung sind auch eine Einkoppelöffnung für einen Beleuchtungsstrahl sowie eine Beleuchtungsoptik vorgesehen, die derart im Bearbeitungskopf angeordnet ist, dass sie den über die Einkoppelöffnung eingekoppelten Beleuchtungsstrahl zumindest annähernd koaxial zur Strahlachse des Bearbeitungsstrahls auf die Bearbeitungsebene richtet. Die Strahlformungsoptik ist derart angeordnet, dass sie den Bearbeitungsstrahl entlang einer Strahlachse durch eine Austrittsöffnung auf eine vor dem Bearbeitungskopf liegende Bearbeitungsebene richtet. Der optische Detektor ist zur ortsaufgelösten Erfassung der von der Bearbeitungsebene parallel oder unter einem kleinen Winkel zur Strahlachse rückreflektierten optischen Strahlung ausgebildet und entsprechend am Bearbeitungskopf befestigt. Der optische Detektor ist mit einer Auswerteeinrichtung verbunden, die mit einem Bildverarbeitungsalgorithmus eine Auswertung der erfassten Reflexionsmuster zur Bestimmung der Relativbewegung zwischen Bearbeitungskopf und Werkstück automatisiert durchführt.

Mit dem vorliegenden Verfahren und der zugehörigen Vorrichtung wird eine Vermessung bzw. Bestimmung einer lateralen Relativbewegung zwischen dem Bearbeitungskopf und dem Werkstück bei der Bearbeitung des Werkstücks berührungslos ermöglicht. Die Genauigkeit des Verfahrens ist unabhängig von den Steuerungsdaten des Handhabungssystems, das das Werkstück oder den Bearbeitungskopf führt. Durch Normierung auf das jeweilige Messintervall für die Erfassung der Reflexionsmuster kann weiterhin auch die durchschnittliche Relativgeschwindigkeit während des Messintervalls berechnet werden. Diese Relativgeschwindigkeit zwischen Bearbeitungskopf und Werkstück, die der Bearbeitungsgeschwindigkeit entspricht, wird bei einer Bearbeitung mit einem Bearbeitungsstrahl beispielsweise für eine Leistungssteuerung des Bearbeitungsstrahls genutzt. Dies kann mit dem Ziel erfolgen, die eingebrachte Streckenergie bei der Bearbeitung des Werkstücks konstant zu halten.

Die Messung der Relativbewegung kann weiterhin für eine qualitätssichernde Prozessüberwachung eingesetzt werden. Das optische System für die Beleuchtung und Erfassung kann zusätzlich als Erfassungssystem für die qualistätssichernde Überwachung mit anderen, bekannten optischen Verfahren genutzt werden, so dass hierfür keine zusätzlichen Bauteile vorgesehen werden müssen.

Durch Kombination des durch die Beleuchtungsoptik und den optischen Detektor gebildeten Sensors mit einem vorlaufenden Sensor zur Detektion der Nahtposition (Nahtfolgesensor), beispielsweise einem Lichtschnittsensor, ist beim Schließen einer Naht im Werkstück eine Bestimmung der Nahtabweichung von der aktuellen Bearbeitungsposition und damit eine Online-Korrektur der Bearbeitungsposition, d. h. eine Nachfolgeregelung, möglich. Die Ermittlung der Momentanposition aus der Steuerung des Handhabungsgerätes oder Roboters ist hierbei nicht notwendig.

Ein besonderer Vorteil des vorliegenden Verfahrens sowie der zugehörigen Vorrichtung besteht darin, dass bei zumindest annähernd koaxialer Beleuchtung und Beobachtung der Bearbeitungszone keinerlei Abschattung oder Verzerrung der Bearbeitungszone im Reflexionsmuster auftritt. Die Relativbewegung kann somit zu jedem Zeitpunkt der Bearbeitung zuverlässig erfasst werden. Die automatische Bildverarbeitung ermöglicht eine Überwachung des Bearbeitungsprozesses in Echtzeit, die auch zur Steuerung oder Regelung dieses Prozesses eingesetzt werden kann.

Als Beleuchtungsquellen können beliebige Lichtquellen eingesetzt werden, deren Intensität ausreichend hoch gegenüber der Intensität der Sekundärstrahlung bzw. rückgestrahlten Bearbeitungsstrahlung ist oder deren Wellenlängen sich in für den Nachweis ausreichendem Maße durch einen optischen Filter von dieser Störstrahlung trennen lassen. Vorzugsweise wird als Beleuchtungsquelle ein Laser, bspw. in Form einer Laserdiode eingesetzt.

## Kurze Beschreibung der Zeichnungen

Das vorliegende Verfahren sowie die zugehörige Vorrichtung werden nachfolgend anhand von Ausführungsbeispielen in Verbindung mit den Zeichnungen ohne Beschränkung des durch die Patentansprüche vorgegebenen Schutzbereichs nochmals näher erläutert. Hierbei zeigen:

Fig. 1/2  ein Beispiel für zwei aufeinander folgend aufgezeichnete Reflexionsmuster der Oberfläche eines Werkstücks;

Fig. 3  ein erstes Beispiel für einen Bearbei- tungskopf gemäß der vorliegenden Erfindung;

Fig. 4  ein zweites Beispiel für einen Bearbei- tungskopf gemäß der vorliegenden Erfindung;

Fig. 5  ein drittes Beispiel für einen Bearbei- tungskopf gemäß der vorliegenden Erfindung; und

Fig. 6  ein viertes Beispiel für einen Bearbei- tungskopf gemäß der vorliegenden Erfindung.

## Wege zur Ausführung der Erfindung

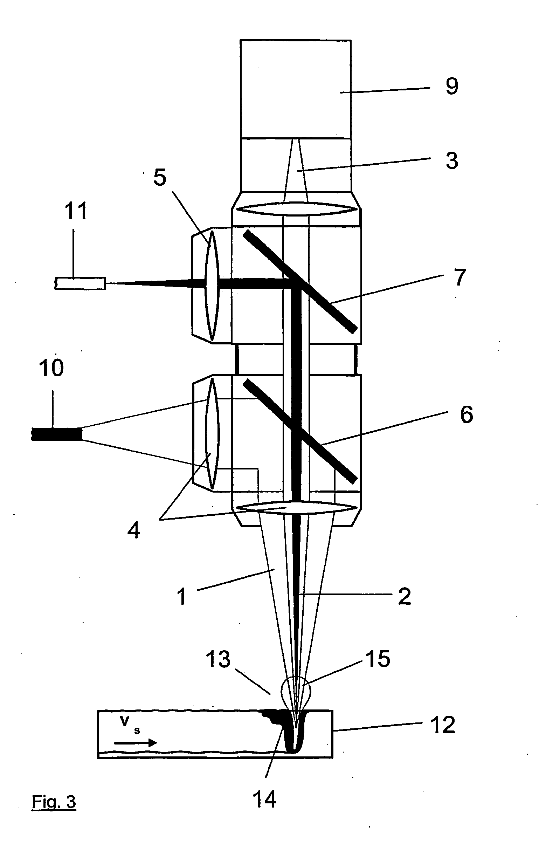

Das vorliegende Verfahren wird zunächst anhand der in Figur 3 gezeigten Vorrichtung bei der Bearbeitung eines Werkstücks 12 mit einem Laserstrahl 1 als Bearbeitungsstrahl nochmals erläutert. Die Figur 3 zeigt hierbei den Bearbeitungskopf einer Ausgestaltung der vorliegenden Vorrichtung mit der Strahlformungs- bzw. Fokussieroptik 4 und dem dichroitischen Umlenkspiegel 6, mit denen der über eine Faser 10 eingekoppelte Laserstrahl 1 auf die Oberfläche des Werkstücks 12 gerichtet wird. Bei der Bearbeitung wird das Werkstück 12 mit der Geschwindigkeit $v_s$ unter dem Laserstrahl 1 hindurchbewegt, um das gewünschte Bearbeitungsergebnis zu erzielen. Die vorliegende Vorrichtung weist weiterhin eine Einkoppelöffnung für den Beleuchtungsstrahl 2 auf, im vorliegenden Fall ein Laserstrahl einer Laserdiode. Der Beleuchtungsstrahl 2 wird über eine Strahlteilerplatte 7 durch den dichroitischen Umlenkspiegel 6 hindurch zur Beleuchtung der Bearbeitungszone 13 des Werkstücks eingesetzt. Es versteht sich von selbst, dass die Wellenlänge des Beleuchtungsstrahls 2 geeignet gewählt sein muss, damit die Beleuchtung durch den dichroitischen Spiegel 6 hindurch erfolgen kann. Die Strahlformung erfolgt über eine Beleuchtungsoptik 5 in Verbindung mit dem für die Laserstrahlformung eingesetzten werkstückseitigen Teil der Fokussieroptik 4.

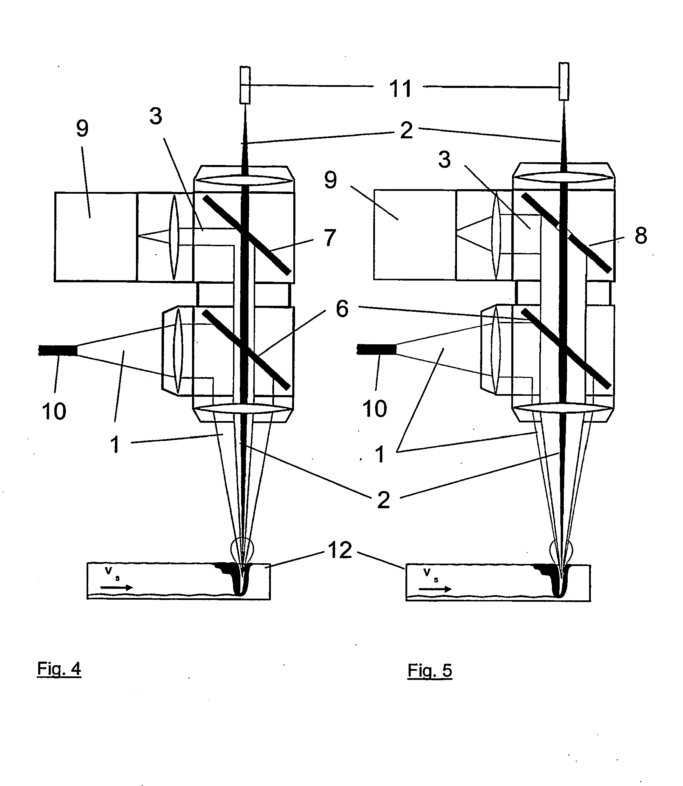

Die von der Werkstückoberfläche rückreflektierten optischen Strahlanteile 3 nehmen den gleichen Weg zurück durch die Strahlteilerplatte 7 hindurch auf eine CMOS-Kamera 9, die ein ortsaufgelöstes Bild der von der Bearbeitungszone 13 rückreflektierten Strahlung aufzeichnet. Die CMOS-Kamera 9 ist in diesem Beispiel, wie auch in den Beispielen der Figuren 4 - 6, mit einer nicht dargestellten Auswerteeinrichtung verbunden, die aus den aufgenommenen Reflexionsmustern durch Vergleich die Relativbewegung ermittelt.

Bei der Bearbeitung des Werkstücks 12 mit dem Laserstrahl 1 wird durch die hohe Intensität des Laserstrahls 1 am Auftreffort der Werkstoff lokal in die gasförmige Phase 15 überführt und zum Teil lokal angeschmolzen, wie dies durch den aufgeschmolzenen Bereich 14 in der Figur 3 veranschaulicht ist. Während dieser Bearbeitung wird durch die koaxiale Beleuchtung und Aufzeichnung der von der Bearbeitungszone rückreflektierten Strahlanteile 3 dieser Beleuchtung ein Reflexionsmuster der Werkstückoberfläche um den momentan bearbeiteten Bereich erhalten. Durch wiederholte Aufzeichnung eines derartigen Reflexionsmusters während der Relativbewegung zwischen Werkstück 12 und Bearbeitungskopf kann die Relativgeschwindigkeit ermittelt werden.

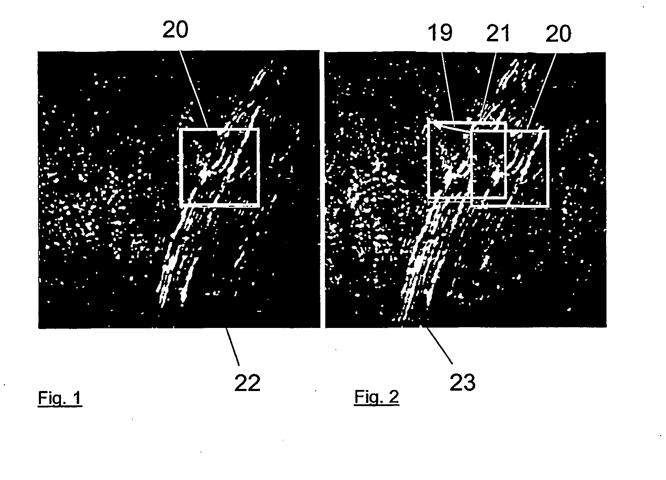

Die Figuren 1 und 2 zeigen hierzu zwei Bilder 22, 23 bzw. Reflexionsmuster der Werkstückoberfläche, die in kurzem Zeitabstand hintereinander mit der Kamera 9 erfasst wurden. Die beiden Aufnahmen zeigen zur besseren Verdeutlichung Unregelmäßigkeiten der Werkstückoberfläche. Dies ist jedoch für die Durchführung des Verfahrens nicht erforderlich. Vielmehr reichen Reflexionsmuster aufgrund der üblichen Oberflächenrauhigkeit der Werkstückoberfläche aus, um das vorliegende Verfahren durchzuführen. In den beiden aufeinander folgenden Bildern 22, 23 werden zur Auswertung Bildausschnitte größter Ähnlichkeit gesucht. Der Suchausschnitt 20 des ersten Bildes 22 wird hierfür im Suchbereich des nachfolgenden Bildes 23 in beiden Koordinatenachsen pixelweise verschoben (vgl. Bild 23 der Fig. 2). Für jede Position wird die Ähnlichkeit ermittelt. Der Ausschnitt größter Ähnlichkeit ist im Bild 23 durch die Umrahmumg 21 markiert. Die Relativbewegung zwischen dem Werkstück und dem Bearbeitungskopf kann dann aus der Verschiebung des Ausschnittes größter Ähnlichkeit in den beiden Bildern unter Berücksichtigung der optischen Abbildung, d. h. der durch die Abbildungsoptik erzeugten Vergrößerung oder Verkleinerung der Werkstückoberfläche, ermittelt werden. Dies ist anhand der Figur 2 gezeigt, in der dem Bild 23 der Bildausschnitt des ersten Bildes 22 der Figur 1 an der ursprünglichen Position überlagert wurde. Die aus dem Vergleich der beiden Bilder ermittelte Verschiebung 19 ist durch den Pfeil angedeutet.

Dieser Vergleich wird für alle jeweils aufeinander folgenden Aufnahmen bzw. Reflexionsmuster durchgeführt. Der zeitliche Abstand für die Aufnahme dieser Reflexionsmuster muss dabei klein genug gewählt werden, um in aufeinander folgenden Bildern jeweils noch identische Teilbereiche erkennen zu können. Auf diese Weise lässt sich die Relativbewegung zwischen dem Bearbeitungskopf und dem Werkstück während der gesamten Bearbeitung überwachen. Selbstverständlich kann diese Bestimmung jedoch auch lediglich zu bestimmten Zeiten erfolgen, indem zumindest zwei aufeinander folgende Aufnahmen gemacht werden.

Ein Maß für die Ähnlichkeit von Bildbereichen (Kreuzkorrelationskoeffizient) kann bspw. durch Berechnung der Summe aller Pixel des Differenzbildes dieser Bildbereiche erhalten werden, wobei bei dieser Definition ein Wert von 0 einer maximalen Ähnlichkeit entspricht:

$$\sum_{x=x_{min}}^{x_{max}} \sum_{y=y_{min}}^{y_{max}} \left| I_1(x,y) - I_2(x,y) \right|$$

mit:

$I_1(x,y)$ = Messwert des Pixels an Position (x,y) des Bildes 1; $I_2(x,y)$ = Messwert des Pixels an Position (x,y) des Bildes 2;

Eine Erhöhung der Messauflösung kann erzielt werden, indem eine Subpixelschätzung durchgeführt wird. Hierbei handelt es sich um ein bekanntes Verfahren der Messtechnik. Als Voraussetzung wird die Gültigkeit eines Korrelationspolynoms, in der Regel in Form eines Paraboloides, in der Nähe des Ähnlichkeitsmaximums unterstellt. Die Verschiebung in Subpixelgenauigkeit entspricht dann dem Maximum des Korrelationspolynoms, wobei das Ähnlichkeitsmaximum sowie die umgebenden Messpunkte als Stützpunkte verwendet werden.

Figur 4 zeigt ein weiteres Beispiel für eine Ausgestaltung der vorliegenden Vorrichtung, bei der die Anordnung der Faser 11 für den Beleuchtungsstrahl 2 und der CMOS-Kamera 9 für die Erfassung der rückreflektierten optischen Strahlung 3 vertauscht sind. Ansonsten gelten die gleichen Ausführungen wie in Verbindung mit Figur 3.

Figur 5 zeigt ein Beispiel für eine Ausgestaltung der vorliegenden Vorrichtung, bei der abweichend von der Ausgestaltung der Figur 4 der Beleuchtungsstrahl 2 durch eine Öffnung in einem Scraper-Spiegel 8 auf die Bearbeitungszone gerichtet wird. Die von der Bearbeitungszone 13 rückreflektierten Strahlanteile 3 werden durch den Scraper-Spiegel 8 auf die CMOS-Kamera 9 gerichtet.

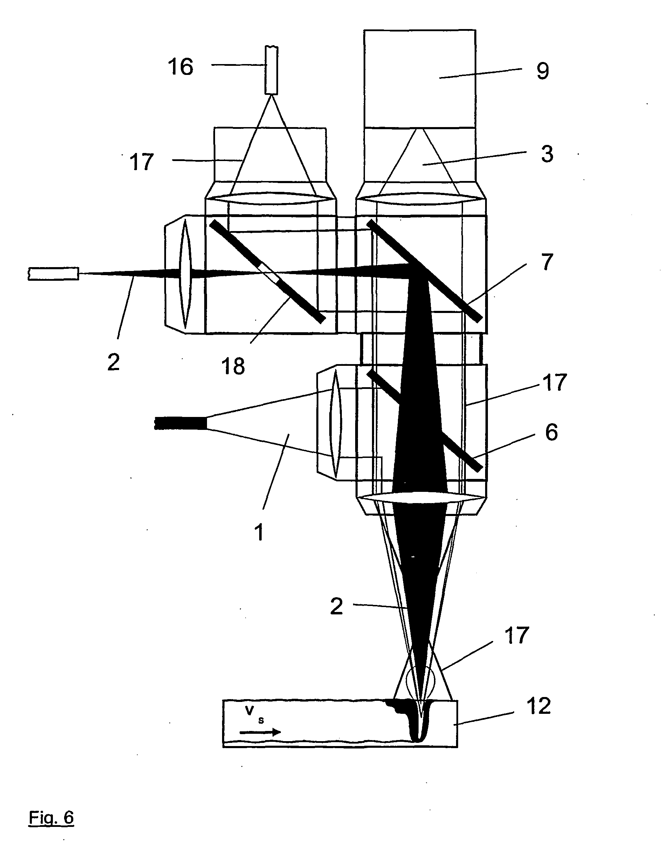

Figur 6 zeigt schließlich eine Weiterbildung der vorliegenden Vorrichtung, bei der zusätzlich zur Ermittlung der Relativbewegung eine Bestimmung der Nahtabweichung von der aktuellen Bearbeitungsposition durchgeführt wird. Dies ist beispielsweise beim Verschweißen der Naht mit dem Bearbeitungsstrahl als zu überwachender Bearbeitungsprozess von Vorteil. Die Vorrichtung weist dabei zusätzlich eine weitere Lichtquelle 16 auf, durch die ein ringförmiger Beleuchtungsstrahl koaxial zum Bearbeitungsstrahl auf das Werkstück gerichtet wird. Der Beleuchtungsstrahl 2 sowie der weitere ringförmige Beleuchtungsstrahl 17 werden dabei über einen Scraper-Spiegel 18 auf der gleichen Achse über den teildurchlässigen Spiegel 7 auf das Werkstück gerichtet, wie es aus der Figur 6 ersichtlich ist. Das durch diesen ringförmigen Beleuchtungsstrahl auf der Werkstückoberfläche erzeugte linienförmige Beleuchtungsmuster wird ebenfalls durch die CMOS-Kamera 9 erfasst und ausgewertet, um die Position der Naht auf der Werkstückoberfläche zu ermitteln. Diese Vorrichtung weist somit neben dem Sensor zur Messung der Relativbewegung auch einen Nahtfolgesensor auf, die beide in den Bearbeitungskopf integriert sind. Für beide Messverfahren wird hierbei der gleiche ortsauflösende Detektor, die CMOS-Kamera 9, eingesetzt.

Der vorlaufende Nahtfolgesensor, d. h. der Sensor zur Detektion der Nahtposition, ermittelt die Nahtlage über ein Lichtschnittverfahren durch die Erfassung der Rückreflexion der koaxialen Ringbeleuchtung. Durch die Bestimmung der Nahtabweichung von der aktuellen Bearbeitungsposition ist eine Online-Korrektur der Bearbeitungsposition (Nahtfolgeregelung) möglich, wobei die notwendige Information der momentanen Bearbeitungsposition durch Integration der gemessenen Geschwindigkeit berechnet wird.

Bezugszeichenliste

1 Bearbeitungs-Laserstrahl
2 Beleuchtungsstrahl
3 rückreflektierte Strahlanteile
4 Fokussieroptik
5 Beleuchtungsoptik
6 dichroitischer Spiegel
7 Strahlteilerplatte
8 Scraper-Spiegel
9 CMOS-Kamera
10 Faser für Bearbeitungsstrahl
11 Faser für Beleuchtungsstrahl
12 Werkstück
13 Bearbeitungszone
14 aufgeschmolzener Bereich
15 gasförmige Phase
16 Lichtquelle für ringförmigen Beleuchtungsstrahl
17 ringförmiger Beleuchtungsstrahl
18 Scraper-Spiegel
19 Verschiebung

20 Suchausschnitt des ersten Bildes
21 Umrahmung für den Ausschnitt größter Ähnlichkeit
22 erstes Bild
23 nachfolgendes Bild

**Patentansprüche**

1. Verfahren zur Bestimmung einer lateralen Relativbewegung zwischen einem Bearbeitungskopf und einem Werkstück bei der Bearbeitung des Werkstücks, bei dem

   - eine Oberfläche des Werkstücks (12) im Bereich des Bearbeitungskopfes mit optischer Strahlung (2) beleuchtet wird, **dadurch gekennzeichnet, dass** die Beleuchtung senkrecht oder nur gering geneigt zur Oberfläche des Werkstücks (12) erfolgt,
   - von der Oberfläche des Werkstücks (12) im Bereich des Bearbeitungskopfes senkrecht zur Oberfläche des Werkstücks (12) reflektierte optische Strahlung (3) wiederholt mit einem optischen Detektor (9) ortsaufgelöst erfasst wird, der fest mit dem Bearbeitungskopf verbunden ist, um durch Oberflächenrauhigkeiten hervorgerufene optische Reflexionsmuster der Oberfläche des Werkstücks (12) zu unterschiedlichen Zeiten zu erhalten, wobei die wiederholte Erfassung in zeitlichen Abständen erfolgt, bei denen zeitlich aufeinander folgende Reflexionsmuster von überlappenden Oberflächenbereichen des Werkstücks (12) erhalten werden, und
   - die laterale Relativbewegung durch Vergleich der zeitlich aufeinander folgenden Reflexionsmuster ermittelt wird.

2. Verfahren nach Anspruch 1,
   **dadurch gekennzeichnet,**
   **dass** bei der Bearbeitung des Werkstücks (12) mit einem Bearbeitungsstrahl (1) die Erfassung der von der Oberfläche des Werkstücks (12) reflektierten optischen Strahlung (3) zumindest annähernd koaxial zum Bearbeitungsstrahl (1) erfolgt.

3. Verfahren nach Anspruch 1 oder 2,
   **dadurch gekennzeichnet,**
   **dass** bei der Bearbeitung des Werkstücks (12) mit einem Bearbeitungsstrahl (1) die Beleuchtung der Oberfläche des Werkstücks (12) zumindest annähernd koaxial zum Bearbeitungsstrahl (1) erfolgt.

4. Verfahren nach Anspruch 3,
   **dadurch gekennzeichnet,**
   **dass** die Beleuchtung der Oberfläche des Werkstücks (12) mit optischer Strahlung (2) und die Erfassung der von der Oberfläche des Werkstücks (12) reflektierten optischen Strahlung (3) durch eine Einrichtung (4, 6) zur Führung und/oder Formung des Bearbeitungsstrahls, insbesondere durch eine Bearbeitungsoptik, hindurch erfolgen.

5. Verfahren nach Anspruch 3 oder 4,
**dadurch gekennzeichnet,**
**dass** ein Wellenlängenbereich für die Beleuchtung der Oberfläche des Werkstücks (12) so gewählt wird, dass durch die Bearbeitung erzeugte Sekundärstrahlung und rückreflektierte Strahlanteile des Bearbeitungsstrahls (1) gegenüber der reflektierten optischen Strahlung (3) mit einem optischen Filter zumindest teilweise unterdrückt werden kann, der vor dem optischen Detektor (9) angeordnet wird.

6. Verfahren nach einem der Ansprüche 2 bis 5,
**dadurch gekennzeichnet,**
**dass** eine Intensität der optischen Strahlung (2) zur Beleuchtung der Oberfläche des Werkstücks (12) so gewählt wird, dass durch die Bearbeitung erzeugte Sekundärstrahlung und rückreflektierte Strahlanteile des Bearbeitungsstrahls (1) durch die reflektierte optische Strahlung (3) am optischen Detektor (9) überstrahlt werden.

7. Verfahren nach einem der Ansprüche 2 bis 6,
**dadurch gekennzeichnet,**
**dass** aus der jeweils ermittelten lateralen Relativbewegung oder einer Mittelung über mehrere ermittelte Relativbewegungen eine laterale Relativgeschwindigkeit berechnet und zur Steuerung der Leistung des Bearbeitungsstrahls (1) eingesetzt wird.

8. Verfahren nach einem der Ansprüche 1 bis 6,
**dadurch gekennzeichnet,**
**dass** aus der jeweils ermittelten lateralen Relativbewegung oder einer Mittelung über mehrere ermittelte Relativbewegungen eine laterale Relativgeschwindigkeit berechnet wird.

9. Verfahren nach einem der Ansprüche 1 bis 8,
**dadurch gekennzeichnet,**
**dass** in den zeitlich aufeinander folgenden Reflexionsmustern Teilabschnitte größter Ähnlichkeit ermittelt werden und aus einem Versatz der Teilabschnitte die Relativbewegung berechnet wird.

10. Verfahren nach Anspruch 9,
**dadurch gekennzeichnet,**
**dass** zur Ermittlung der Teilabschnitte größter Ähnlichkeit Kreuzkorrelationen zwischen den zeitlich aufeinander folgenden Reflexionsmustern gebildet werden.

11. Verfahren nach einem der Ansprüche 1 bis 10,
**dadurch gekennzeichnet,**
**dass** die Oberfläche des Werkstücks (12) in Bearbeitungsrichtung vor einem momentanen Bearbeitungsbereich zusätzlich unter einem Triangulationswinkel linienförmig mit optischer Strahlung (17) beleuchtet und ein auf der Oberfläche gebildetes Beleuchtungsmuster mit dem optischen Detektor (9) erfasst wird, um mittels Lichtschnittverfahren durch Auswertung des Beleuchtungsmusters eine momentane Position einer Naht an der Oberfläche zu erhalten.

12. Verfahren nach einem der Ansprüche 1 bis 10,
**dadurch gekennzeichnet,**
**dass** durch Auswertung der Reflexionsmuster eine momentane Position einer Naht an der Oberfläche ermittelt wird.

13. Verfahren nach Anspruch 11 oder 12,
**dadurch gekennzeichnet,**
**dass** eine Nahtabweichung von einer momentanen Bearbeitungsposition aus den Reflexionsmustern und der momentanen Position der Naht ermittelt und zur Steuerung der lateralen Relativbewegung herangezogen wird, um die Nahtabweichung zu minimieren.

14. Vorrichtung für die Bearbeitung eines Werkstücks mit einem Bearbeitungsstrahl, insbesondere einem Laserstrahl, zumindest umfassend

- einen Bearbeitungskopf, der eine Einkoppelöffnung für den Bearbeitungsstrahl (1), eine Strahlformungsoptik (4), mit der der Bearbeitungsstrahl (1) entlang einer Strahlachse durch eine Austrittsöffnung auf eine vor dem Bearbeitungskopf liegende Bearbeitungsebene gerichtet wird, und einen optischen Detektor (9) aufweist, **dadurch gekennzeichnet, dass** der optische Detektor mechanisch fest mit dem Bearbeitungskopf verbunden und so angeordnet ist, dass er von der Bearbeitungsebene parallel oder unter einem kleinen Winkel zur Strahlachse reflektierte optische Strahlung (3) eines Beleuchtungsstrahls (2) ortsaufgelöst erfassen kann, und

- eine mit dem optischen Detektor (9) verbundene Auswerteeinrichtung, die einen Bildverarbeitungsalgorithmus zur Auswertung zeitlich aufeinander folgender Reflexionsmuster, die durch Oberflächenrauhigkeiten einer in der Bearbeitungsebene befindlichen Oberfläche eines Werkstücks (12) hervorgerufen werden, für die automatisierte Bestimmung einer lateralen Relativbewegung zwischen dem Bearbeitungskopf und dem Werkstück (12) aufweist,

- wobei der Bearbeitungskopf eine weitere Einkoppelöffnung für den Beleuchtungsstrahl (2) und eine Beleuchtungsoptik (5) aufweist, die den Beleuchtungsstrahl (2) zumindest annähernd koaxial zur Strahlachse des Bearbeitungsstrahls (1) auf die Bearbeitungsebene richtet.

**15.** Vorrichtung nach Anspruch 14,
**dadurch gekennzeichnet,**
**dass** für den Beleuchtungs- (2) oder Bearbeitungsstrahl (1) ein dichroitischer Spiegel (6) als Umlenkspiegel vorgesehen ist.

**16.** Vorrichtung nach Anspruch 14,
**dadurch gekennzeichnet,**
**dass** für den Beleuchtungs- (2) oder Bearbeitungsstrahl (1) ein Umlenkspiegel (8) mit zumindest einer Öffnung vorgesehen ist, durch die hindurch der Bearbeitungs- (1) oder Beleuchtungsstrahl (2) auf die Bearbeitungsebene gerichtet wird.

**17.** Vorrichtung nach einem der Ansprüche 14 bis 16,
**dadurch gekennzeichnet,**
**dass** der Bearbeitungskopf eine weitere Einkoppelöffnung für einen weiteren Beleuchtungsstrahl (17) aufweist und die Beleuchtungsoptik (5) so ausgebildet ist, dass sie den weiteren Beleuchtungsstrahl (17) unter einem Triangulationswinkel auf die Bearbeitungsebene richtet und der optische Detektor (9) von der Bearbeitungsebene parallel oder unter einem kleinen Winkel zur Strahlachse reflektierte optische Strahlung des weiteren Beleuchtungsstrahls (17) ortsaufgelöst erfassen kann.

**Claims**

**1.** A method to determine a lateral relative movement between a machining head and a workpiece during the machining of the workpiece, in which:

- a surface of the workpiece (12) in the region of the machining head is illuminated with optical radiation (2),
**characterised in that** illumination takes place at right-angles to, or only slightly inclined to, the surface of the workpiece (12),
- optical radiation (3) reflected from the surface of the workpiece (12) in the region of the machining head at right-angles to the surface of the workpiece (12) is repeatedly recorded in a spatially resolved manner with an optical detector (9), which detector is securely connected with the machining head, in order to obtain at different times optical reflection patterns of the surface of the workpiece (12) caused by surface roughnesses, wherein
the repeated recordings take place at separations in time at which reflection patterns of overlapping surface regions of the workpiece (12) following one another in time are obtained, and
- the lateral relative movement is determined by comparison of the reflection patterns following one another in time.

**2.** The method according to Claim 1,
**characterised in that** during the machining of the workpiece (12) with a machining beam (1) the recording of the optical radiation (1) reflected from the surface of the workpiece (12) takes place at least approximately coaxially with the machining beam (1).

**3.** The method according to Claim 1 or 2,
**characterised in that** during the machining of the workpiece (12) with a machining beam (1) the illumination of the surface of the workpiece (12) takes place at least approximately coaxially with the machining beam (1).

**4.** The method according to Claim 3,
**characterised in that** the illumination of the surface of the workpiece (12) with optical radiation (2) and the recording of the optical radiation (3) reflected from the surface of the workpiece (12) take place by means of a device (4, 6) to guide and/or shape the machining beam, in particular by means of machining optics.

**5.** The method according to Claim 3 or 4,
**characterised in that** a range of wavelengths for the illumination of the surface of the workpiece (12) is selected such that secondary radiation and back-reflected components of the machining beam (1) generated by the machining can be at least partially suppressed with an optical filter relative to the reflected optical radiation (3), which filter is arranged ahead of the optical detector (9).

**6.** The method according to one of the Claims 2 to 5,
**characterised in that** an intensity of the optical radiation (2) to illuminate the surface of the workpiece (12) is selected such that secondary radiation and back-reflected components of the machining beam (1) generated by the machining are of lesser intensity than the reflected optical radiation (3) at the optical detector (9).

**7.** The method according to one of the Claims 2 to 6,
**characterised in that** a lateral relative velocity is calculated from the lateral relative movement determined in each case, or from an average determined over a plurality of relative movements, and utilised to control the power of the machining beam (1).

**8.** The method according to one of the Claims 1 to 6,
**characterised in that** a lateral relative velocity is calculated from the lateral relative movement determined in each case, or from an average determined over a plurality of relative movements.

**9.** The method according to one of the Claims 1 to 8, **characterised in that** sub-sections of greatest similarity are determined in the reflection patterns following one another in time, and the relative velocity is calculated from a displacement of the sub-sections.

**10.** The method according to Claim 9, **characterised in that** to determine the sub-sections of greatest similarity cross-correlations are formed between the reflection patterns following one another in time.

**11.** The method according to one of the Claims 1 to 10, **characterised in that** the surface of the workpiece (12) in the machining direction ahead of an instantaneous machining region is additionally linearly illuminated with optical radiation (17) at a triangulation angle and an illumination pattern formed on the surface is recorded with the optical detector (9), in order to obtain an instantaneous position of a seam on the surface by means of evaluation of the illumination pattern using light section methods.

**12.** The method according to one of the Claims 1 to 10, **characterised in that** an instantaneous position of a seam on the surface is determined by means of evaluation of the reflection pattern.

**13.** The method according to Claim 11 or 12, **characterised in that** a seam deviation from an instantaneous machining position is determined from the reflection patterns and the instantaneous position of the seam, and is drawn upon to control the lateral relative movement, in order to minimise the seam deviation.

**14.** A device for the machining of a workpiece with a machining beam, in particular a laser beam, at least comprising

- a machining head, which has a coupling-in opening for the machining beam (1), beam shaping optics (4), with which the machining beam (1) is directed along a beam axis through an exit opening onto a machining plane lying ahead of the machining head, and an optical detector (9), **characterised in that** the optical detector is securely connected mechanically with the machining head and is arranged such that it can record in a spatially resolved manner optical radiation (3) reflected from the machining plane parallel to, or at a small angle to, the axis of an illuminating beam (2) , and
- an evaluation device connected with the optical detector (9), which device has an image processing algorithm to evaluate reflection patterns following one another in time, which patterns are caused as a result of surface roughnesses of a surface of the workpiece (12) located in the machining plane, for the automatic determination of a lateral relative movement between the machining head and the workpiece (12)
- wherein the machining head has a further coupling-in opening for the illuminating beam (2) and illuminating optics (5), which direct the illuminating beam (2) at least approximately coaxially to the axis of the machining beam (1) onto the machining plane.

**15.** The device according to Claim 14, **characterised in that** a dichroitic mirror (6) is provided as a deflecting mirror for the illuminating (2) or machining beam (1).

**16.** The device according to Claim 14, **characterised in that** a deflecting mirror (8) is provided for the illuminating (2) or machining beam (1) with at least one opening, through which the illuminating (2) or machining beam (1) is directed onto the machining plane.

**17.** A device according to one of the Claims 14 to 16, **characterised in that** the machining head has a further coupling-in opening for a further illuminating beam (17), and the illuminating optics (5) is designed such that it directs the further illuminating beam (17) at a triangulation angle onto the machining plane and such that the optical detector (9) can record in a spatially resolved manner optical radiation reflected from the machining plane parallel to, or at a small angle to, the axis of the further illuminating beam (17).

**Revendications**

**1.** Procédé de définition d'un mouvement latéral relatif entre une tête d'usinage et une pièce lors de l'usinage de la pièce, dans lequel

- une surface de la pièce (12) est éclairée au niveau de la tête d'usinage au moyen d'un rayonnement optique (2), **caractérisé en ce que** l'éclairage se fait perpendiculairement ou seulement avec une faible inclinaison par rapport à la surface de la pièce (12),
- le rayonnement optique (3) réfléchi par la surface de la pièce (12) au niveau de la tête d'usinage est détecté à répétition en définition locale au moyen d'un détecteur optique (9) qui est relié fixement à la tête d'usinage afin d'obtenir des modèles de réflexion optiques dû aux rugosités de la surface de la pièce (12) à des heures différentes, la détection répétée ayant lieu à des intervalles temporels pour lesquels on obtient des modèles de réflexion se succédant dans le temps de zones surfaciques en chevauchement de la pièce (12), et

- le mouvement latéral relatif est déterminé par comparaison des modèles de réflexion se succédant dans le temps.

2. Procédé selon la revendication 1,
**caractérisé en ce que,**
lors de l'usinage de la pièce (12) à l'aide d'un rayon d'usinage (1), l'enregistrement du rayonnement optique (3) réfléchi par la surface de la pièce (12) se fait du moins approximativement coaxialement par rapport au rayon d'usinage (1).

3. Procédé selon la revendication 1 ou 2,
**caractérisé en ce que,**
lors de l'usinage de la pièce (12) à l'aide d'un rayon d'usinage (1), l'éclairage de la surface de la pièce (12) se fait du moins approximativement coaxialement par rapport au rayon d'usinage (1).

4. Procédé selon la revendication 3,
**caractérisé en ce que**
l'éclairage de la surface de la pièce (12) au moyen d'un rayonnement optique (2) et la détection du rayonnement optique (3) réfléchi par la surface de la pièce (12) sont assurés par un dispositif (4, 6) de guidage et/ou de formage du rayon d'usinage, notamment par une optique d'usinage.

5. Procédé selon la revendication 3 ou 4,
**caractérisé en ce que**
une plage de longueur d'onde pour l'éclairage de la surface de la pièce (12) est sélectionnée de manière à ce que le rayonnement secondaire généré par l'usinage et les parties du rayon rétro-réfléchies du rayon d'usinage (1) puisse être du moins partiellement diminué par rapport au rayonnement optique réfléchi (3) au moyen d'un filtre optique qui est disposé en amont du détecteur optique (9).

6. Procédé selon une des revendications 2 à 5,
**caractérisé en ce que**
une intensité du rayonnement optique (2) pour l'éclairage de la surface de la pièce (12) est sélectionnée de manière à ce que le rayonnement secondaire généré par l'usinage et les parties du rayon rétro-réfléchies du rayon d'usinage (1) soit augmenté par le rayonnement optique réfléchi (3) au niveau du détecteur optique (9).

7. Procédé selon une des revendications 2 à 6,
**caractérisé en ce que,**
à partir du mouvement latéral relatif respectivement déterminé ou d'une moyenne de plusieurs mouvements relatifs déterminés, une vitesse latérale relative est calculée et utilisée pour contrôler la puissance du rayon d'usinage (1).

8. Procédé selon une des revendications 1 à 6,
**caractérisé en ce que,**
à partir du mouvement latéral relatif respectivement déterminé ou d'une moyenne de plusieurs mouvements relatifs déterminés, une vitesse latérale relative est calculée.

9. Procédé selon une des revendications 1 à 8,
**caractérisé en ce que,**
dans les modèles de réflexion se succédant dans le temps, des sous-sections de similarité maximale sont déterminées et que, à partir d'un décalage des sous-sections, le mouvement relatif est calculé.

10. Procédé selon la revendication 9,
**caractérisé en ce que,**
pour déterminer les sous-sections de similarité maximale, des corrélations croisées entre les modèles de réflexion se succédant dans le temps sont établies.

11. Procédé selon une des revendications 1 à 10,
**caractérisé en ce que**
la surface de la pièce (12), dans le sens d'usinage, avant une plage d'usinage momentanée, est en outre éclairée de manière linéaire suivant un angle de triangulation au moyen d'un rayonnement optique (17) et qu'un modèle d'éclairage établi sur la surface est détecté au moyen du détecteur optique (9) afin, au moyen d'un procédé de coupe optique, par exploitation du modèle d'éclairage, d'obtenir une position momentanée d'une soudure au niveau de la surface.

12. Procédé selon une des revendications 1 à 10,
**caractérisé en ce que,**
par exploitation des modèles d'éclairage, une position momentanée d'une soudure au niveau de la surface est déterminée.

13. Procédé selon la revendication 11 ou 12,
**caractérisé en ce que**
un écart de la soudure par rapport à une position d'usinage momentanée est déterminé à partir des modèles de réflexion et de la position momentanée de la soudure et est utilisé pour contrôler le mouvement latéral relatif afin de minimiser l'écart de la soudure.

14. Dispositif pour l'usinage d'une pièce au moyen d'un rayon d'usinage, notamment un rayon laser, comprenant au moins

- une tête d'usinage qui présente un orifice de pénétration pour le rayon d'usinage (1), une optique de formage de rayons (4) qui permet de diriger le rayon d'usinage (1) le long d'un axe de rayon à travers un orifice de sortie vers un plan d'usinage placé devant la tête d'usinage et un détecteur optique (9), **caractérisé en ce que** le détecteur optique est mécaniquement relié fixement à la tête d'usinage et est disposé de manière à ce qu'il puisse détecter en définition locale le rayonnement optique (3) réfléchi par le plan d'usinage parallèlement ou suivant un angle réduit par rapport à l'axe du rayon d'un rayon d'éclairage (2), et

- un dispositif d'exploitation relié au détecteur optique (9) et qui présente un algorithme de traitement d'images pour exploiter les modèles de réflexion se succédant dans le temps qui sont dus à des rugosités de surface d'une surface se trouvant dans le plan d'usinage d'une pièce (12) pour la définition automatisée d'un mouvement latéral relatif entre la tête d'usinage et la pièce (12),

- la tête d'usinage présentant un autre orifice de pénétration pour le rayon d'éclairage (2) et une optique d'éclairage (5) qui dirige le rayon d'éclairage (2) du moins approximativement coaxialement par rapport à l'axe de rayon du rayon d'usinage (1) sur le plan d'usinage.

**15.** Procédé selon la revendication 14, **caractérisé en ce que** il est prévu, pour le rayon d'éclairage (2) ou d'usinage (1), un miroir dichroïque (6) servant de miroir de déviation.

**16.** Procédé selon la revendication 14, **caractérisé en ce que** il est prévu, pour le rayon d'éclairage (2) ou d'usinage (1), un miroir de déviation (8) comportant au moins un orifice à travers lequel le rayon d'éclairage (2) ou d'usinage (1) est dirigé sur le plan d'usinage.

**17.** Procédé selon une des revendications 14 à 16, **caractérisé en ce que** la tête d'usinage présente un autre orifice de pénétration pour un autre rayon d'éclairage (17) et l'optique d'éclairage (5) est réalisée de manière à ce qu'elle dirige l'autre rayon d'éclairage (17) suivant un angle de triangulation sur le plan d'usinage et que le détecteur optique (9) puisse détecter en définition locale le rayonnement optique réfléchi par le plan d'usinage parallèlement ou suivant un angle réduit par rapport à l'axe de rayon de l'autre rayon d'éclairage (17).

20

**Fig. 1**

22

19 21 20

**Fig. 2**

23

Fig. 3

Fig. 4

Fig. 5

14

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4891767 A
- DE 10126725 A1